# EUROPÄISCHE PATENTSCHRIFT

(11) **EP 2 664 536 B1**
(45) Veröffentlichungstag und Bekanntmachung des Hinweises auf die Patenterteilung: **01.05.2019**
(21) Anmeldenummer: 13002554.7
(22) Anmeldetag: 15.05.2013
(51) Int. Cl.: B63H 23/02, B63H 23/10, B63H 21/20, B63H 23/30, B63H 23/12, B63H 21/17

(54) **Schiffsantriebsystem**
Vessel propulsion system
Système d'entraînement de navire

(30) Priorität: 15.05.2012 DE 102012208065
(43) Veröffentlichungstag der Anmeldung: 20.11.2013
(73) Patentinhaber: Renk Aktiengesellschaft, 86159 Augsburg (DE)
(72) Erfinder: Hultsch, Hartmut, 86343 Königsbrunn (DE); Kleinheinz, Tobias, 86497 Torgau (DE)
(74) Vertreter: Schlosser, Stefan

(56) Entgegenhaltungen:
- DE-A1-102009 010 656
- GB-A- 410 031
- US-A- 5 616 056
- US-A1- 2009 186 537

## Beschreibung

Die Erfindung betrifft ein Schiffsantriebssystem mit einem Antriebswellenstrang, der eingerichtet ist, Drehantriebsleistung von einer Brennkraftmaschine zu empfangen und einem Vortriebselement Drehantriebsleistung zuzuführen, und einem Elektromotor, der eingerichtet ist, dem Antriebswellenstrang Drehantriebsleistung zuzuführen.

Ein solches Schiffsantriebssystem ist z.B. aus DE 100 61 578 A1 bekannt, wobei als Brennkraftmaschine z.B. ein langsamlaufender Dieselmotor vorgesehen ist, dessen Kurbelwelle über eine einen Antriebswellenstrang bildende Propellerwelle mit einem Schiffspropeller als Vortriebselement verbunden ist. Zwischen dem Dieselmotor und dem Schiffspropeller ist ein langsamlaufender ständig in Betrieb befindlicher Elektromotor zur Unterstützung des Dieselmotors angeordnet, wobei die Ankerwelle des Elektromotors von der Propellerwelle gebildet ist, so dass der Elektromotor unmittelbar in die Propellerwelle eintreibt. Eine Nennleistung des Elektromotors liegt bei wenigstens 5 Prozent der Nennleistung der Brennkraftmaschine.

Durch den direkten Eintrieb des Elektromotors in die Propellerwelle ist kein zusätzliches Getriebe erforderlich. Allerdings muss in diesem Fall der langsamlaufende Elektromotor so groß und stabil dimensioniert sein, dass er die erforderliche Drehantriebsleistung bei der geringen Drehzahl von etwa 100 U/min bereitstellen und aufgrund der direkten Schockeinleitung die volle Stärke von an der Propellerwelle auftretenden Schockwirkungen (wie z.B. Drehmomentschocks) beschädigungsfrei ertragen kann. Dies bedingt ein deutlich höheres Gewicht und einen größeren Platzbedarf und höhere Anschaffungskosten des Elektromotors gegenüber Anlagen mit schnelllaufendem Elektromotor.

Soll der Elektromotor von der Propellerwelle abkuppelbar sein, so wäre wegen der geringen Nenndrehzahl von z.B. im Bereich 50 bis 150 U/min und dem daraus resultierenden hohen Drehmoment eine relativ große Schaltkupplung bzw. Trennkupplung (wie z.B. eine Lamellenkupplung) notwendig.

Außerdem wird durch den direkten Eintrieb des Elektromotors in die Propellerwelle und dessen in der Regel starre Aufstellung auf dem Schiffsfundament auch dessen Körperschall direkt in die Propellerwelle und das Schiffsfundament eingeleitet, so dass im Elektromotorbetrieb eine starke Geräuschentwicklung auftreten kann.

Aus der US 5 616 056 A1, aus der GB 410 031 A, aus der US 2009/186537 A1 und aus der DE 10 2009 00656 A1 sind weitere Schiffsantriebssysteme bekannt.

Der Erfindung liegt die Aufgabe zugrunde, ein Schiffsantriebssystem mit einer wie eingangsgenannten Kombination von Antriebswellenstrang und Elektromotor bereitzustellen, welches einen geringeren Herstellungsaufwand aufweist.

Dies wird mit einem Schiffsantriebssystem gemäß Anspruch 1 erreicht. Weiterbildungen der Erfindung sind in den abhängigen Ansprüchen definiert.

Unter einem schnelllaufenden Elektromotor wird gemäß der Erfindung ein Elektromotor ab einer Nenndrehzahl von über etwa 600 U/min verstanden. Bevorzugt hat der schnelllaufende Elektromotor gemäß der Erfindung eine Nenndrehzahl von über 600 U/min bis etwa 1800 U/min und auch darüber und bevorzugt ein Gewicht von deutlich unter dem Gewicht des langsamlaufenden Elektromotors.

In die zweite Getriebeschnittstelle des ersten Getriebes treibt die Brennkraftmaschine ein, wobei die Brennkraftmaschine bevorzugt einen Dieselmotor und/oder eine Gasturbine aufweist.

Dadurch, dass die beiden Schaltkupplungen vorgesehen sind, kann je nach gewünschter Betriebsart entweder der Elektromotor oder das erste Getriebe mechanisch stillgelegt werden oder können auch der Elektromotor und das erste Getriebe beide in Drehantriebsverbindung mit dem Antriebswellenstrang und dem Vortriebselement stehen, um diesem Drehantriebsleistung zuzuführen.

Somit kann in einem reinen Elektromotorbetrieb das erste Getriebe, welches bevorzugt als ein Hauptgetriebe fungiert, mechanisch stillgelegt werden, womit die von dem Schiffsantriebssystem bewirkte Geräuschentwicklung stark reduziert werden kann.

Durch die Verwendung eines schnelllaufenden Elektromotors in Kombination mit einem drehzahluntersetzenden Getriebe kann das zum Drehantreiben des bevorzugt als Schiffspropeller ausgebildeten Vortriebselements notwendige bzw. gewünschte Antriebsmoment bei deutlich geringerem Gewicht und Bauraum für Elektromotor und Untersetzungsgetriebe realisiert werden. Aufgrund der hohen Antriebsdrehzahl des Elektromotors und des dadurch resultierendes Drehmoments ist eine deutlich kleinere Schaltkupplung (z.B. Lamellenkupplung) erforderlich als bei einer Anlage mit langsamlaufendem Elektromotor, wenn die Lamellenkupplung an der Antriebswelle des schnelllaufenden Elektromotors angebaut wird. Insgesamt lassen sich somit die Komponentenkosten beträchtlich reduzieren.

Gemäß einer Ausführungsform der Erfindung weist das Schiffsantriebssystem Lagerungsmittel auf, die so ausgebildet sind, dass sowohl der Elektromotor als auch das von diesem mit Drehantriebsleistung gespeiste Getriebe elastisch an einem Schiffsfundament abstützbar sind.

Auf diese Weise wird die Einleitung von Körperschall in das Schiffsfundament erheblich reduziert, so dass die Geräuschentwicklung insbesondere im Elektromotorbetrieb noch mehr reduziert werden kann.

Bevorzugt weisen die Lagerungsmittel eine Rahmenkonstruktion, an welcher der Elektromotor und das von diesem mit Drehantriebsleistung gespeiste Getriebe gemeinsam gehalten sind, und eine Mehrzahl von Elastikelementen auf, die an der Rahmenkonstruktion angebracht sind, so dass die Rahmenkonstruktion über die Elastikelemente an dem Schiffsfundament abstützbar ist.

Die Elastikelemente sind bevorzugt weichelastisch ausgebildet, so dass deren körperschalldämpfende Eigenschaften noch stärker ausgeprägt sind.

Gemäß noch einer Ausführungsform der Erfindung ist die Rahmenkonstruktion konstruktiv körperschalldämpfend ausgebildet, indem sie z.B. mit Hohlprofilen konstruiert ist, wobei die Hohlprofile z.B. mit körperschalldämpfendem Material gefüllt sind.

Allgemein kann das (zweite) Getriebe mit dem Elektromotor auf einem separaten Rahmen stehen oder über Elastikelemente direkt auf dem Schifffundament gelagert werden. Wenn der Elektromotor mit dem von diesem mit Drehantriebsleistung gespeisten Getriebe auf einem Rahmen gelagert wird, wird der Rahmen mit Hilfe einer elastischen Lagerung (Elastikelemente) auf dem Schiffsfundament befestigt.

Durch die weichelastische Aufstellung einzeln oder mit gemeinsamen Rahmen für Elektromotor und von diesem mit Drehantriebsleistung gespeistem drehzahluntersetzendem Getriebe kann eine geringere Körperschalleinleitung in das Schiffsfundament realisiert werden.

Gemäß der Erfindung ist der Getriebeausgang des zweiten Getriebes über Axial-und-Winkel-und-Radialversatz erlaubende Kuppelmittel mit dem Antriebswellenstrang antriebsverbunden.

Durch diese Axial-und-Winkel-und Radialversatz erlaubenden kardanischen bevorzugt elastischen Kuppelmittel können größere Verlagerungen zwischen erstem Getriebe (bevorzugt Hauptgetriebe) und Propellerwelle sowie elastisch gelagertem zweitem Getriebe und Elektromotor zuverlässig ausgeglichen werden. Bevorzugt sind die Kuppelmittel mit Körperschalldämpfung (z.B. via elastischer Ausgestaltung) versehen.

Durch diese elastische Kupplung des zweiten Getriebes mit dem Antriebswellenstrang (welcher eine Propellerwelle aufweist) kann die Körperschalleinleitung in den Antriebswellenstrang reduziert werden.

Durch die elastische Aufstellung und Einbindung des zweiten Getriebes und des Elektromotors in das Schiffsantriebssystem wird die im Betrieb an diesen wirkende Schockbelastung deutlich reduziert.

Gemäß noch einer Ausführungsform der Erfindung ist der Kupplungseingang der zweiten Schaltkupplung mit einer die Drehantriebsleistung bereitstellenden Abtriebswelle des Elektromotors antriebsverbunden und ist der Kupplungsausgang der zweiten Schaltkupplung mit dem Getriebeeingang des zweiten Getriebes antriebsverbunden.

Diese Ausgestaltung der Erfindung stellt eine Möglichkeit zur Anordnung der zweiten Schaltkupplung bereit, welche sich z.B. für die in Bezug auf das erste Getriebe achternseitige Anordnung von zweitem Getriebe und Elektromotor eignet.

Gemäß einer weiteren Ausführungsform der Erfindung ist die zweite Schaltkupplung in den Antriebswellenstrang eingebunden, so dass der Kupplungsausgang der zweiten Schaltkupplung in Drehantriebsverbindung mit dem Getriebeausgang des zweiten Getriebes steht und so dass der Kupplungseingang der zweiten Schaltkupplung in Drehantriebsverbindung mit dem Kupplungseingang der ersten Schaltkupplung steht.

Diese Ausgestaltung der Erfindung stellt eine weitere Möglichkeit zur Anordnung der zweiten Schaltkupplung bereit, welche sich z.B. für die in Bezug auf das erste Getriebe vorschiffsseitige Anordnung von zweitem Getriebe und Elektromotor eignet. Besonders vorteilhaft bei dieser Ausgestaltung der Erfindung ist, dass sich mit Trennen der zweiten Schaltkupplung neben dem Elektromotor auch das zweite Getriebe mechanisch stilllegen lässt, so dass die mechanischen Schleppverluste und die Geräuschentwicklung im reinen Brennkraftmaschinenbetrieb reduziert werden.

Gemäß noch einer weiteren Ausführungsform der Erfindung sind das erste Getriebe und das zweite Getriebe über eine flexible öldichte Verbindung, wie z.B. eine flexible Ölwanne, miteinander verbunden.

Gemäß noch einer Ausführungsform der Erfindung ist zusätzlich eine Haube vorgesehen, welche eine Schallkapselung für den Elektromotor und das von diesem mit Drehantriebsleistung gespeiste Getriebe bereitstellt.

Im Fazit ist in einem erfindungsgemäßen Schiffantriebssystem eine geräuschoptimierte Anordnung eines separaten Getriebes (zweiten Getriebes) für einen schnelllaufenden Elektromotor zum Antrieb einer Propellerwelle, ggf. auch in Verbindung mit einem Hauptgetriebe (ersten Getriebe) für einen Diesel und/oder Gasturbinenantrieb, realisiert.

In einem erfindungsgemäßen Schiffantriebssystem kann eine kombinierte Anordnung von einem schnelllaufenden Elektromotor und einem von diesem mit Drehantriebsleistung gespeisten drehzahluntersetzenden Getriebe auf einem gemeinsamen, weich elastisch auf einem Schiffsfundament gelagertem Rahmen realisiert sein, wobei eine doppelkardanische und elastische Wellenversatzkupplung von einer Untersetzungsgetriebe-Abtriebswelle zum Antriebswellenstrang bzw. einer darin vorgesehenen Propellerwelle und bevorzugt auch eine zusätzliche elastische Lagerung zwischen Elektromotor und drehzahluntersetzenden Getriebe zum Rahmen vorgesehen sein können.

In einem mit dem erfindungsgemäßen Schiffantriebssystem ausgerüsteten Schiff ist somit vom Hauptgetriebe (ersten Getriebe) aus vorschiffseitig oder auf achtern gesehen ein schnelldrehender Elektromotor platziert. Mit dem erfindungsgemäßen Schiffantriebssystem ist durch die beiden Schaltkupplungen realisierbar, dass im Elektromotorbetrieb das komplette Hauptgetriebe stillsteht und der Elektromotor bei Bedarf (z.B. im Außerbetriebszustand) abkuppelbar ist.

Bei dem erfindungsgemäßen Schiffantriebssystem ist es außerdem realisiert, dass die Geräuschentwicklung durch die Antriebsanlage im Elektromotorbetrieb möglichst gering ist. Vorteile eines schnelllaufenden Elektromotors gegenüber einem langsamlaufenden Elektromotor sind, dass das Motorgewicht und die Anschaffungskosten des schnellerlaufenden Elektromotors deutlich geringer sind.

Bei dem erfindungsgemäßen Schiffantriebssystem wird im reinen Dieselmotor- und/oder-Gasturbinen-Betrieb der Elektromotor abgekuppelt und wird im reinen Elektromotorbetrieb das Hauptgetriebe (erste Getriebe) abgekuppelt. Mit dem erfindungsgemäßen Schiffantriebssystem ist dabei ein höherer Wirkungsgrad im Elektromotorbetrieb und im Gasturbinenbetrieb / Dieselmotorbetrieb als bei Integrierung des Elektromotors im Hauptgetriebe erzielbar.

Bei Bedarf ist auch ein kombinierter Antrieb möglich, wobei sowohl der Elektromotor als auch das Hauptgetriebe eingekuppelt wird. Wenn die Brennkraftmaschine einen Dieselmotor und eine Gasturbine aufweist, ist somit ein sogenannter CODELAG (COmbined Diesel, ELectric And Gas Turbine) -Betrieb möglich, wobei alle drei Antriebsmaschinen (Elektromotor, Dieselmotor und Gasturbine) die Drehantriebsleistung für das Vortriebselement erzeugen.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren detaillierter beschrieben.
- Fig.1: zeigt eine von der Seite gesehene schematische Längsschnittansicht eines Schiffsantriebssystems gemäß einer Ausführungsform der Erfindung.
- Fig.2: zeigt eine schematische Längsschnittansicht von Axial-und-Winkelversatz erlaubenden Kuppelmitteln gemäß einer Ausführungsform der Erfindung.
- Fig.3: zeigt eine schematische Seitenansicht eines Schiffsantriebssystems gemäß einer weiteren Ausführungsform der Erfindung.
- Fig.4: zeigt eine perspektivische Seitenansicht des Schiffsantriebssystems von Fig.3.

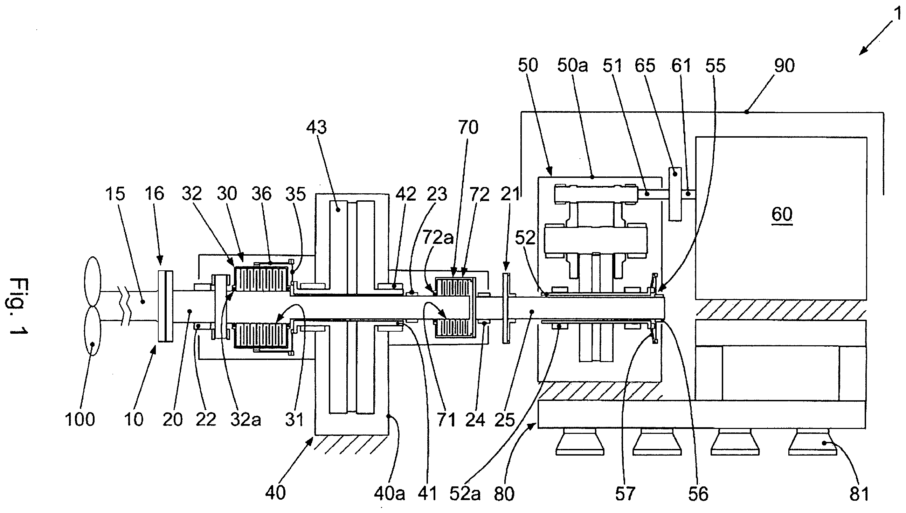

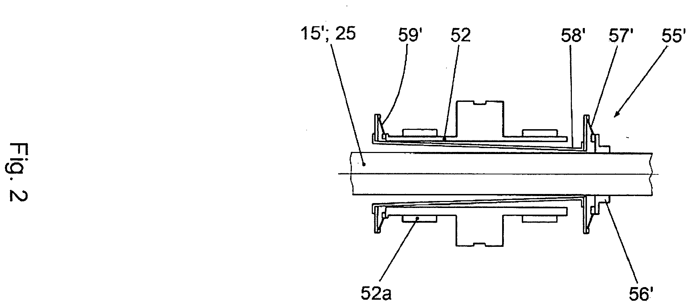

Im Folgenden wird unter Bezugnahme auf die Figuren 1 und 2 ein Schiffsantriebssystem 1 gemäß einer ersten Ausführungsform der Erfindung beschrieben werden.

Wie in Fig.1 gezeigt, weist das Schiffsantriebssystem 1 einen Antriebswellenstrang 10, eine erste Schaltkupplung 30, ein erstes Getriebe 40, ein zweites Getriebe 50, einen schnelllaufenden Elektromotor 60, eine zweite Schaltkupplung 70, eine Rahmenkonstruktion 80, eine Haube 90, ein als Schiffspropeller ausgebildetes Vortriebselement 100 und eine Brennkraftmaschine (nicht dargestellt) auf.

Gemäß der ersten Ausführungsform der Erfindung weist der Antriebswellenstrang 10 eine Propellerwelle 15, die mit dem Vortriebselement 100 antriebsverbunden ist, eine zweiteilige Zwischenwelle 20, die über eine Flanschverbindung 16 mit der Propellerwelle 15 antriebsverbunden ist und die sich durch das erste Getriebe 40 hindurch erstreckt, und eine Torsionswelle 25 auf, die über eine Axial-und-Winkelversatz erlaubende elastische Kupplung 21 (die z.B. eine elastische Membran aufweist) mit der Zwischenwelle 20 antriebsverbunden ist und die sich durch das zweite Getriebe 50 hindurch erstreckt.

Die Zwischenwelle 20 ist über Rotationslager 22, 23, 24 drehbar an einem Gehäuse 40a des ersten Getriebes 40 gelagert. Wie aus Fig.1 ersichtlich ist, sind neben dem ersten Getriebe 40 auch die erste und die zweite Schaltkupplung 30, 70 in diesem Gehäuse 40a untergebracht.

Die erste Schaltkupplung bzw. Trennkupplung 30 ist als Lamellenkupplung ausgebildet und weist einen Kupplungseingang 31, an dem eine Mehrzahl von Kupplungsinnenlamellen vorgesehen sind, und einen Kupplungsausgang 32 auf, an dem eine Mehrzahl von Kupplungsaußenlamellen vorgesehen sind.

Der Kupplungseingang 31 ist von einem Abschnitt der Zwischenwelle 20 gebildet, wohingegen der Kupplungsausgang 32 von einem über Radial-Axial-Lager 32a drehbar auf der Zwischenwelle 20 gelagerten hülsenähnlichen Außenlamellenträger gebildet ist. Der Kupplungseingang 31 und der Kupplungsausgang 32 sind durch gegenseitiges miteinander in oder außer Reibeingriff bringen der Kupplungsinnenlamellen und Kupplungsaußenlamellen selektiv miteinander in und außer Antriebsverbindung bringbar.

In Fig.1 linksseits an die erste Schaltkupplung 30 angrenzend ist außerdem ein Drucklager (nicht bezeichnet) in das Gehäuse 40a des ersten Getriebes 40 integriert
Wie aus dem Obigen erkennbar, ist der Kupplungseingang 31 der ersten Schaltkupplung 30 mit dem Antriebswellenstrang 10 antriebsverbunden, so dass Drehantriebsleistung an das Vortriebselement 100 übertragbar ist.

Das erste Getriebe 40 weist zwei Getriebeschnittstellen auf, über die dem ersten Getriebe 40 jeweils Drehantriebsleistung zuführbar und von diesem abführbar ist, wobei eine der beiden Getriebeschnittstellen mit dem Kupplungsausgang 32 der ersten Schaltkupplung 30 antriebsverbunden ist.

Genauer wird die mit dem Kupplungsausgang 32 der ersten Schaltkupplung 30 antriebsverbundene erste Getriebeschnittstelle des ersten Getriebes 40 von einer Hohlwelle 41 gebildet, durch die sich die Zwischenwelle 20 hindurch erstreckt und die über Rotationslager 42 drehbar am Gehäuse 40a des ersten Getriebes 40 gelagert ist. Die Hohlwelle 41 ist über eine Axial-und-Winkelversatz erlaubende elastische Kupplung 35 (die z.B. eine elastische Membran aufweist) und eine Torsionshülse 36 mit dem Kupplungsausgang 32 der ersten Schaltkupplung 30 antriebsverbunden.

Die zweite Getriebeschnittstelle wird von einem auf der Hohlwelle 41 befestigten Zahnrad 43 gebildet. In das Zahnrad 43 treibt über nicht dargestellte weitere Getriebemittel die Brennkraftmaschine ein, welche bevorzugt einen Dieselmotor und/oder eine Gasturbine aufweist.

Somit ist der Antriebswellenstrang 10 eingerichtet, Drehantriebsleistung von der Brennkraftmaschine zu empfangen und dem Vortriebselement 100 Drehantriebsleistung zuzuführen.

Die zweite Schaltkupplung bzw. Trennkupplung 70 ist als Lamellenkupplung ausgebildet und weist einen Kupplungseingang 71, an dem eine Mehrzahl von Kupplungsinnenlamellen vorgesehen sind, und einen Kupplungsausgang 72 auf, an dem eine Mehrzahl von Kupplungsaußenlamellen vorgesehen sind.

Der Kupplungseingang 71 ist von einem Abschnitt der Zwischenwelle 20 gebildet, wohingegen der Kupplungsausgang 72 von einem über ein Radial-Axial-Lager 72a drehbar auf einem in Fig.1 linken Teil der Zwischenwelle 20 gelagerten hülsenähnlichen Außenlamellenträger gebildet ist. An dem Außenlamellenträger (Kupplungsausgang 72) ist ein Wellenzapfen angebracht, der in dem Rotationslager 24 drehbar gelagert ist und der den in Fig.1 rechten Teil der Zwischenwelle 20 bildet.

Der Kupplungseingang 71 und der Kupplungsausgang 72 sind durch gegenseitiges miteinander in oder außer Reibeingriff bringen der Kupplungsinnenlamellen und Kupplungsaußenlamellen selektiv miteinander in und außer Antriebsverbindung bringbar.

Das zweite Getriebe 50 weist einen Getriebeeingang 51 in Form einer Triebwelle und einen mit dem Getriebeeingang 51 in Antriebsverbindung stehenden Getriebeausgang 52 in Form einer Hohlwelle auf, welche mittels Rotationslagern 52a drehbar in einem Gehäuse 50a des zweiten Getriebes 50 gelagert ist. Wie für Fachleute erkennbar, sind auch die übrigen Komponenten des zweiten Getriebes 50 jeweils an dessen Gehäuse 50a geeignet gelagert bzw. abgestützt. Das zweite Getriebe 50 ist so konfiguriert, dass es von seinem Getriebeeingang 51 zu seinem Getriebeausgang 52 eine Drehzahluntersetzung (Drehzahlreduzierung) bereitstellt.

Die Hohlwelle (d.h. der Getriebeausgang 52) ist über Axial-und-Winkel-und-Radialversatz erlaubende kardanische elastische Kuppelmittel 55 mit der Torsionswelle 25 des Antriebswellenstrangs 10 antriebsverbunden.

Wie aus Fig.1 ersichtlich, ist auf der Torsionswelle 25 ein Flansch 56 angebracht, welcher über eine elastische Membran 57 mit der Hohlwelle (d.h. dem Getriebeausgang 52) des zweiten Getriebes 50 antriebsverbunden ist.

Eine alternative Ausführungsform von solchen Kuppelmitteln 55' ist beispielhaft in Fig.2 gezeigt. Hier ist auf der Torsionswelle 25 ein Flansch 56' angebracht, welcher über eine erste elastische Membran 57' mit einer Torsionshülse 58' antriebsverbunden ist. Die Torsionshülse 58' ist über eine zweite elastische Membran 59' mit der Hohlwelle (d.h. dem Getriebeausgang 52) des zweiten Getriebes 50 antriebsverbunden.

Durch die elastische Membran 57 bzw. elastischen Membranen 57', 59' weisen die Kuppelmittel 55, 55' körperschalldämpfende Eigenschaften auf.

Der schnelllaufende Elektromotor 60 weist eine Nenndrehzahl von etwa typischerweise über 600 U/min bis etwa 1800 U/min und darüber auf.

Der Elektromotor 60 ist eingerichtet, um dem Antriebswellenstrang 10 über den Getriebeeingang 51 des zweiten Getriebes 50 Drehantriebsleistung zuzuführen. Genauer weist der Elektromotor 60 eine die Drehantriebsleistung bereitstellende Abtriebswelle 61 auf, welche über eine elastische Kupplung 65 mit dem Getriebeeingang 51 (der Triebwelle) des zweiten Getriebes 50 antriebsverbunden ist.

Die Rahmenkonstruktion 80 ist so ausgebildet, dass daran der Elektromotor 60 und das zweite Getriebe 50 gemeinsam gehalten bzw. abgestützt sind. An der Rahmenkonstruktion 80 sind eine Mehrzahl von Elastikelementen (z.B. Gummipuffer) 81 angebracht, so dass die Rahmenkonstruktion 80 über die Elastikelemente 81 elastisch und körperschallgedämpft an einem Schiffsfundament (nicht dargestellt) abstützbar ist. Bevorzugt sind die Elastikelemente 81 weichelastisch ausgebildet.

Die Rahmenkonstruktion 80 und die daran angebrachten Elastikelemente 81 bilden somit Lagerungsmittel, mit denen sowohl der Elektromotor 60 als auch das zweite Getriebe 50 elastisch am Schiffsfundament abstützbar sind.

Gemäß einer bevorzugten Ausgestaltung der Erfindung kann zusätzlich die Rahmenkonstruktion 80 konstruktiv körperschalldämpfend ausgebildet sein, indem sie z.B. mit Hohlprofilen konstruiert ist, wobei die Hohlprofile z.B. mit körperschalldämpfendem Material gefüllt sind.

Die Haube 90 ist so ausgebildet, dass sie eine Schallkapselung für den Elektromotor 60 und das zweite Getriebe 50 bereitstellt, wodurch eine zusätzliche Geräuschreduzierung hinsichtlich der vom Elektromotor 60 und dem zweiten Getriebe 50 in deren Betrieb abgegebenen Geräusche erzielt wird.

Obwohl in Fig.1 nicht gezeigt, können gemäß einer bevorzugten Ausgestaltung der Erfindung das erste Getriebe 40 und das zweite Getriebe 50 über eine flexible öldichte Verbindung miteinander verbunden sein.

Wie aus den obigen Erläuterungen erkennbar, ist die zweite Schaltkupplung 70 so in den Antriebswellenstrang 10 eingebunden, dass der Kupplungsausgang 72 der zweiten Schaltkupplung 70 in Drehantriebsverbindung mit dem Getriebeausgang 52 des zweiten Getriebes 50 steht und dass der Kupplungseingang 71 der zweiten Schaltkupplung 70 in Drehantriebsverbindung mit dem Kupplungseingang 31 der ersten Schaltkupplung 30 steht (Um die Baugröße der Kupplung 70 zu reduzieren, kann diese auch am Getriebeeingang 51 angeordnet werden).

Demnach können der Kupplungseingang 71 und der Kupplungsausgang 72 der zweiten Schaltkupplung 70 selektiv miteinander in und außer Antriebsverbindung gebracht werden, um eine Antriebsverbindung des.Elektromotors 60 mit dem Kupplungseingang 31 der ersten Schaltkupplung 30 sowie mit dem Vortriebselement 100 herzustellen oder zu trennen.

Im Betrieb des Schiffsantriebssystem 1 ergeben sich somit die folgenden Antriebsmöglichkeiten für das Vortriebselement 100.

Soll der Antrieb des Vortriebselements 100 nur mit Drehantriebsleistung der Brennkraftmaschine erfolgen, so wird die zweite Schaltkupplung 70 ausgekuppelt, wobei deren Kupplungseingang 71 und Kupplungsausgang 72 außer Antriebsverbindung miteinander gebracht werden. Ferner wird die erste Schaltkupplung 30 eingekuppelt, wobei deren Kupplungseingang 31 und Kupplungsausgang 32 in Antriebsverbindung miteinander gebracht werden. Auf diese Weise werden das zweite Getriebe 50 und der Elektromotor 60 mechanisch stillgelegt.

Soll der Antrieb des Vortriebselements 100 nur mit Drehantriebsleistung des Elektromotors 60 erfolgen, so wird die zweite Schaltkupplung 70 eingekuppelt, wobei deren Kupplungseingang 71 und Kupplungsausgang 72 in Antriebsverbindung miteinander gebracht werden. Ferner wird die erste Schaltkupplung 30 ausgekuppelt, wobei deren Kupplungseingang 31 und Kupplungsausgang 32 außer Antriebsverbindung miteinander gebracht werden. Auf diese Weise wird das erste Getriebe 40 (und bevorzugt auch die Brennkraftmaschine) mechanisch stillgelegt, so dass die Geräuschentwicklung im reinen Elektromotorbetrieb äußerst gering ist.

Bei Bedarf ist auch ein kombinierter Antrieb des Vortriebselements 100 mittels Drehantriebsleistung des Elektromotors 60 und der Brennkraftmaschine möglich. Zu diesem Zweck wird sowohl die erste Schaltkupplung 30 als auch die zweite Schaltkupplung 70 eingekuppelt.

Wenn die Brennkraftmaschine einen Dieselmotor und eine Gasturbine aufweist, ist somit ein sogenannter CODELAG (COmbined Diesel, ELectric And Gas Turbine) - Betrieb möglich, wobei alle drei Antriebsmaschinen (Elektromotor, Dieselmotor und Gasturbine) die Drehantriebsleistung für das Vortriebselement 100 erzeugen.

Wie aus dem Obigen entnehmbar, sind bei der mit Bezug auf die Figuren 1 und 2 beschriebenen ersten Ausführungsform der Erfindung der Elektromotor 60 und das zweite Getriebe 50 vom ersten Getriebe 40 (welches ein Hauptgetriebe bildet) aus gesehen vorschiffseitig angeordnet.

Nun wird unter Bezugnahme auf die Figuren 2 bis 4 ein Schiffsantriebssystem 1' gemäß einer zweiten Ausführungsform der Erfindung beschrieben werden, welches bis auf einige im Folgenden erläuterte Unterschiede ähnlich dem Schiffsantriebssystem 1 gemäß der ersten Ausführungsform der Erfindung ausgebildet ist. Demgemäß sind in der folgenden Beschreibung gleiche oder ähnliche Komponenten mit gleichen Bezugszeichen bezeichnet. Unterschiede in der Ausgestaltung der Komponenten sind durch Hinzufügung eines Apostrophs zu den Bezugszeichen gekennzeichnet.

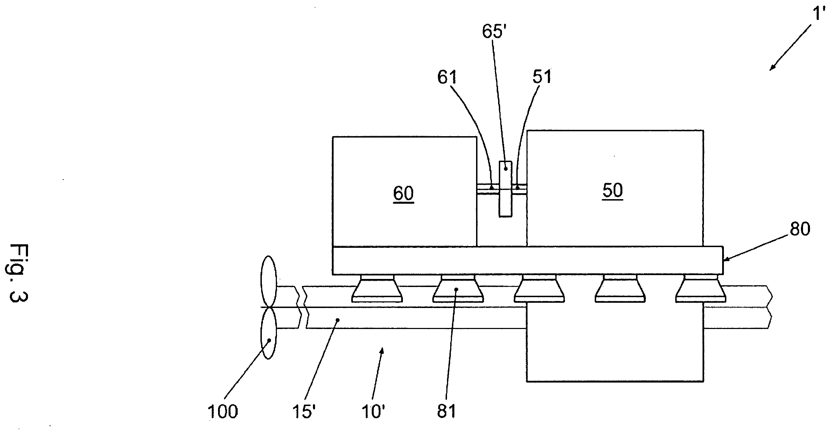

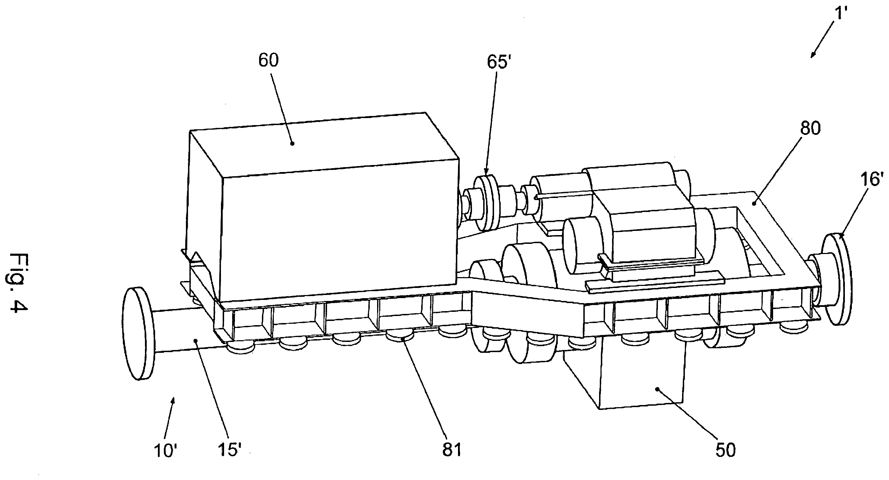

Obwohl in den Figuren 3 und 4 nicht gezeigt, weist auch das Schiffsantriebssystem 1' gemäß der zweiten Ausführungsform der Erfindung das erste Getriebe auf, welches ähnlich dem mit Bezug auf Fig.1 beschriebenen ersten Getriebe 40 aufgebaut ist und welches hier jedoch in Bezug auf die Figuren 3 und 4 rechts des zweiten Getriebes 50 angeordnet ist. Mit anderen Worten sind bei der zweiten Ausführungsform der Erfindung der schnelllaufende Elektromotor 60 und das zweite Getriebe 50 vom ersten Getriebe (welches ein Hauptgetriebe bildet) aus gesehen auf achtern bzw. abtriebsseitig des ersten Getriebes angeordnet, in welches die Brennkraftmaschine eintreibt
Gemäß der zweiten Ausführungsform der Erfindung ist die den Elektromotor 60 und das zweite Getriebe 50 verbindende Kupplung als die zweite Schaltkupplung 65' ausgebildet, wobei der Kupplungseingang der zweiten Schaltkupplung 65' mit der die Drehantriebsleistung bereitstellenden Abtriebswelle 61 des Elektromotors 60 antriebsverbunden ist und der Kupplungsausgang der zweiten Schaltkupplung 65' mit dem Getriebeeingang 51 des zweiten Getriebes 50 antriebsverbunden ist.

Gemäß der zweiten Ausführungsform der Erfindung weist der Antriebswellenstrang 10' die Propellerwelle 15', die mit dem Vortriebselement 100 antriebsverbunden ist und die sich durch das zweite Getriebe 50 hindurch erstreckt, und eine einteilige Zwischenwelle (nicht gezeigt) auf, die über eine Flanschverbindung 16' mit der Propellerwelle 15' antriebsverbunden ist und die sich durch das erste Getriebe hindurch erstreckt.

Da gemäß der zweiten Ausführungsform der Erfindung die zweite Schaltkupplung 65' nun zwischen dem Elektromotor 60 und dem zweiten Getriebe 50 angeordnet ist, ist im Gehäuse des ersten Getriebes nur die erste Schaltkupplung angeordnet und kann somit die Zwischenwelle einteilig ausgeführt sein.

Die Hohlwelle (d.h. der Getriebeausgang 52) des zweiten Getriebes 50 ist über die in Fig.2 gezeigten Axial-und-Winkel-und-Radialversatz erlaubenden kardanischen elastischen Kuppelmittel 55' mit der Propellerwelle 15' des Antriebswellenstrangs 10' antriebsverbunden.

Demgemäß ist auf der Propellerwelle 15' der Flansch 56' angebracht, welcher über die erste elastische Membran 57' mit der Torsionshülse 58' antriebsverbunden ist. Die Torsionshülse 58' ist über die zweite elastische Membran 59' mit der Hohlwelle (d.h. dem Getriebeausgang 52) des zweiten Getriebes 50 antriebsverbunden.

In diesem Zusammenhang ist zu bemerken, dass jegliche im Rahmen der Erfindung verwendeten Axial-und-Winkelversatz erlaubenden Kupplungen sowohl als wie oben beschriebene Membrankupplungen als auch als Zahnkupplungen ausgebildet sein können.

Wie aus dem Obigen ersichtlich, können der Kupplungseingang und der Kupplungsausgang der zweiten Schaltkupplung 65' selektiv miteinander in und außer Antriebsverbindung gebracht werden, um eine Antriebsverbindung des Elektromotors 60 mit dem Kupplungseingang der im Gehäuse des ersten Getriebes untergebrachten ersten Schaltkupplung sowie mit dem Vortriebselement 100 herzustellen oder zu trennen.

Im Fazit ist gemäß der zweiten Ausführungsform der Erfindung bereitgestellt eine Anordnung von schnelllaufendem Elektromotor 60 mit dem zweiten Getriebe 50 und Rahmenkonstruktion 80 über versatzaufnehmende Kupplung auf die Propellerwelle 15' abtriebsseitig des ersten Getriebes mit Verbrennungskraftmaschine. Gemäß der zweiten Ausführungsform der Erfindung ist die Schaltkupplung 70 (siehe Fig.1) weggelassen und durch die schnelllaufende und damit kleinere Schaltkupplung 65' ersetzt.

Im Betrieb des Schiffsantriebssystem 1' ergeben sich somit die folgenden Antriebsmöglichkeiten für das Vortriebselement 100.

Soll der Antrieb des Vortriebselements 100 nur mit Drehantriebsleistung der Brennkraftmaschine erfolgen, so wird die zweite Schaltkupplung 65' ausgekuppelt, wobei deren Kupplungseingang und Kupplungsausgang außer Antriebsverbindung miteinander gebracht werden. Ferner wird die erste Schaltkupplung eingekuppelt, wobei deren Kupplungseingang und Kupplungsausgang in Antriebsverbindung miteinander gebracht werden. Auf diese Weise wird der Elektromotor 60 mechanisch stillgelegt, wobei jedoch das zweite Getriebe 50 weiter drehangetrieben wird.

Soll der Antrieb des Vortriebselements 100 nur mit Drehantriebsleistung des Elektromotors 60 erfolgen, so wird die zweite Schaltkupplung 65' eingekuppelt, wobei deren Kupplungseingang und Kupplungsausgang in Antriebsverbindung miteinander gebracht werden. Ferner wird die erste Schaltkupplung ausgekuppelt, wobei deren Kupplungseingang und Kupplungsausgang außer Antriebsverbindung miteinander gebracht werden. Auf diese Weise wird das erste Getriebe (und bevorzugt auch die Brennkraftmaschine) mechanisch stillgelegt, so dass die Geräuschentwicklung im reinen Elektromotorbetrieb äußerst gering ist.

Bei Bedarf ist auch ein kombinierter Antrieb des Vortriebselements 100 mittels Drehantriebsleistung des Elektromotors 60 und der Brennkraftmaschine möglich. Zu diesem Zweck wird sowohl die erste Schaltkupplung als auch die zweite Schaltkupplung 65' eingekuppelt.

Wenn die Brennkraftmaschine einen Dieselmotor und eine Gasturbine aufweist, ist somit wieder ein CODELAG-Betrieb möglich, wobei alle drei Antriebsmaschinen (Elektromotor, Dieselmotor und Gasturbine) die Drehantriebsleistung für das Vortriebselement 100 erzeugen.

Ein Schiffsantriebssystem gemäß einer dritten Ausführungsform der Erfindung ist gegenüber dem Schiffsantriebssystem 1' gemäß der zweiten Ausführungsform der Erfindung so modifiziert, dass es lediglich den schnelllaufenden Elektromotor 60, das an diesen über die Schaltkupplung 65' angekuppelte Getriebe 50 (Untersetzungsgetriebe) und die Axial-und-Winkel-und-Radialversatz ausgleichenden kardanischen elastischen Kuppelrhittel 55' zur Verbindung des Getriebeausgangs 52 des Getriebes 50 mit der Propellerwelle 15' aufweist. Ein erstes Getriebe bzw. Hauptgetriebe 40 sowie eine darin eintreibende Brennkraftmaschine sind gemäß der dritten Ausführungsform der Erfindung nicht vorgesehen.

Auch bei der dritten Ausführungsform der Erfindung können ggf. die mit Bezug auf die Figuren 1, 3 und 4 beschriebene Rahmenkonstruktion 80 und die daran angebrachten Elastikelemente 81 vorgesehen sein, so dass der schnelllaufende Elektromotor 60 und das untersetzende Getriebe 50 gemeinsam an der Rahmenkonstruktion 80 gehalten bzw. abgestützt sind und die Rahmenkonstruktion 80 über die Elastikelemente 81 elastisch und körperschallgedämpft am Schiffsfundament abstützbar ist.

Die Rahmenkonstruktion 80 und die daran angebrachten Elastikelemente 81 bilden in diesem Fall wieder Lagerungsmittel, mit denen sowohl der schnelllaufende Elektromotor 60 als auch das untersetzende Getriebe 50 elastisch am Schiffsfundament abstützbar sind.

### Bezugszeichenliste

- 1;1': Schiffsantriebssystem
- 10; 10': Antriebswellenstrang
- 15; 15': Propellerwelle
- 16; 16': Flanschverbindung
- 20: Zwischenwelle
- 21: Kupplung
- 22: Rotationslager
- 23: Rotationslager
- 24: Rotationslager
- 25: Torsionswelle
- 30: erste Schaltkupplung
- 31: Kupplungseingang
- 32: Kupplungsausgang
- 32a: Radial-Axial-Lager
- 35: Kupplung
- 36: Torsionshülse
- 40: erstes Getriebe
- 40a: Gehäuse
- 41: Hohlwelle
- 42: Rotationslager
- 43: Zahnrad
- 50: zweites Getriebe
- 50a: Gehäuse
- 51: Getriebeeingang
- 52: Getriebeausgang
- 52a: Rotationslager
- 55; 55': Kuppelmittel
- 56; 56': Flansch
- 57; 57': Membran
- 58': Torsionshülse
- 59': Membran
- 60: Elektromotor
- 61: Abtriebswelle
- 65: Kupplung
- 70; 65': zweite Schaltkupplung
- 71: Kupplungseingang
- 72: Kupplungsausgang
- 72a: Radial-Axial-Lager
- 80: Rahmenkonstruktion
- 81: Elastikelemente
- 90: Haube
- 100: Vortriebselement

## Patentansprüche

1. Schiffsantriebssystem (1; 1') aufweisend:
einen Antriebswellenstrang (10; 10') mit einer Propellerwelle (15, 15'), der eingerichtet ist, Drehantriebsleistung von einer Brennkraftmaschine zu empfangen und einem Vortriebselement (100) Drehantriebsleistung zuzuführen,
eine erste Schaltkupplung (30) mit einem Kupplungseingang (31) und einem Kupplungsausgang (32), welche selektiv miteinander in und außer Antriebsverbindung bringbar sind, wobei der Kupplungseingang (31) der ersten Schaltkupplung (30) mit dem Antriebswellenstrang (10; 10') antriebsverbunden ist, so dass Drehantriebsleistung an das Vortriebselement (100) übertragbar ist,
ein erstes Getriebe (40) mit zwei Getriebeschnittstellen (41, 43), über die dem ersten Getriebe (40) jeweils Drehantriebsleistung zuführbar und von diesem abführbar ist, wobei eine erste Getriebeschnittstelle (41) des ersten Getriebes (40) mit dem Kupplungsausgang (32) der ersten Schaltkupplung (30) antriebsverbunden ist, und wobei in eine zweite Getriebeschnittstelle (43) des ersten Getriebes (40) die Brennkraftmaschine eintreibt,
ein elastisch gelagertes zweites Getriebe (50) mit einem Getriebeeingang (51) und einem Getriebeausgang (52), der mit dem Antriebswellenstrang (10; 10') antriebsverbunden ist, wobei der Getriebausgang (52) des zweiten Getriebes (50) mit dem Antriebswellenstrang (10; 10') über Axial-und-Winkel-und-Radialversatz erlaubende kardanische Kuppelmittel (55, 55') antriebsverbunden ist, und wobei das zweite Getriebe (50) von seinem Getriebeeingang (51) zu seinem Getriebeausgang (52) eine Drehzahluntersetzung bereitstellt,
einen schnelllaufenden Elektromotor (60), der eingerichtet ist, um dem Antriebswellenstrang (10; 10') über den Getriebeeingang (51) des zweiten Getriebes (50) Drehantriebsleistung zuzuführen, und
eine zweite Schaltkupplung (70; 65') mit einem Kupplungseingang (71) und einem Kupplungsausgang (72), welche selektiv miteinander in und außer Antriebsverbindung bringbar sind, um eine Antriebsverbindung des Elektromotors (60) mit dem Kupplungseingang (31) der ersten Schaltkupplung (30) herzustellen oder zu trennen.

2. Schiffsantriebssystem (1; 1') gemäß Anspruch 1, wobei Lagerungsmittel vorgesehen sind, so dass sowohl der Elektromotor (60) als auch das von diesem mit Drehantriebsleistung gespeiste zweite Getriebe (50) elastisch an einem Schiffsfundament abstützbar sind.

3. Schiffsantriebssystem (1; 1') gemäß Anspruch 2, wobei die Lagerungsmittel eine Rahmenkonstruktion (80), an welcher der Elektromotor (60) und das von diesem mit Drehantriebsleistung gespeiste zweite Getriebe (50) gemeinsam gehalten sind, und eine Mehrzahl von Elastikelementen (81) aufweisen, die an der Rahmenkonstruktion (80) angebracht sind, so dass die Rahmenkonstruktion (80) über die Elastikelemente (81) an dem Schiffsfundament abstützbar ist.

4. Schiffsantriebssystem (1; 1') gemäß Anspruch 3, wobei die Rahmenkonstruktion (80) konstruktiv körperschalldämpfend ausgebildet ist.

5. Schiffsantriebssystem (1; 1') gemäß einem der Ansprüche 1 bis 4, wobei die Kuppelmittel (55; 55') mit Körperschalldämpfung versehen sind.

6. Schiffsantriebssystem (1') gemäß einem der Ansprüche 1 bis 5, wobei der Kupplungseingang der zweiten Schaltkupplung (65') mit einer die Drehantriebsleistung bereitstellenden Abtriebswelle (61) des Elektromotors (60) antriebsverbunden ist, und wobei der Kupplungsausgang der zweiten Schaltkupplung (65') mit dem Getriebeeingang (51) des zweiten Getriebes (50) antriebsverbunden ist.

7. Schiffsantriebssystem (1) gemäß einem der Ansprüche 1 bis 5, wobei die zweite Schaltkupplung (70) in den Antriebswellenstrang (10) eingebunden ist, so dass der Kupplungsausgang (72) der zweiten Schaltkupplung (70) in Drehantriebsverbindung mit dem Getriebeausgang (52) des zweiten Getriebes (50) steht und so dass der Kupplungseingang (71) der zweiten Schaltkupplung (70) in Drehantriebsverbindung mit dem Kupplungseingang (31) der ersten Schaltkupplung (30) steht.

8. Schiffsantriebssystem (1; 1') gemäß einem der Ansprüche 1 bis 7, wobei das erste Getriebe (40) und das zweite Getriebe (50) über eine flexible öldichte Verbindung miteinander verbunden sind.

9. Schiffsantriebssystem (1; 1') gemäß einem der Ansprüche 1 bis 8, wobei ferner eine Haube (90) vorgesehen ist, welche eine Schallkapselung für den Elektromotor (60) und das von diesem mit Drehantriebsleistung gespeiste zweite Getriebe (50) bereitstellt.

## Claims

1. A ship's propulsion system (1; 1'), comprising:
a driveshafting (10; 10') having a propeller shaft (15, 15'), which is equipped to receive torsional drive power from an internal combustion engine and feed torsional drive power to a propulsion element (100),
a first clutch (30) with a clutch input (31) and a clutch output (32), which can be selectively connected and drive disconnected to one another, wherein the clutch input (31) of the first clutch (30) is drive-connected to the driveshafting (10; 10'), so that torsional drive power can be transmitted to the propulsion element (100),
a first transmission (40) with two transmission interfaces (41, 43), via which torsional drive power can be fed to and removed from the first transmission (40) in each case, wherein a first transmission interface (41) of the first transmission (40) is drive-connected to the clutch output (32) of the first clutch (30), and wherein the internal combustion engine drives into a second transmission interface (43) of the first transmission (40),
an elastically mounted second transmission (50) with a transmission input (51) and a transmission output (52), which is drive-connected to the driveshafting (10; 10'), wherein the transmission output (52) of the second transmission (50) is drive-connected to the driveshafting (10; 10') via cardanic coupling means (55, 55') allowing axial and angular and radial offsets, and wherein the second transmission (50) from its transmission input (51) to its transmission output (52) provide a rotational speed reduction,
a fast-running electric motor (60) which is equipped in order to feed torsional drive power to the driveshafting (10; 10') via the transmission input (51) of the second transmission (50), and
a second clutch (70, 65') with a clutch input (71) and a clutch output (72) which can be selectively drive-connected and disconnected to/from one another in order to establish or disconnect a drive connection of the electric motor (60) with the clutch input (31) of the first clutch (30).

2. The ship's propulsion system (1; 1') according to Claim 1, wherein mounting means are provided so that both the electric motor (60) and also the second transmission (50) fed with torsional drive power by the same, can be elastically supported on a ship's foundation.

3. The ship's propulsion system (1; 1') according to Claim 2, wherein the mounting means comprise a frame structure (80), on which the electric motor (60) and the second transmission (50) fed with rotational drive power by the same, are jointly held and a plurality of elastic elements (81), which are attached to the frame structure (80), so that the frame structure (80) can be supported on the ship's foundation via the elastic elements (81).

4. The ship's propulsion system (1; 1') according to Claim 3, wherein the frame structure (80) is designed so as to dampen structure-borne vibrations.

5. The ship's propulsion system (1; 1') according to any one of the Claims 1 to 4, wherein the coupling means (55; 55') are provided with structure-borne vibration damping.

6. The ship's propulsion system (1') according to any one of the Claims 1 to 5, wherein the clutch input of the second clutch (65') is drive-connected to an output shaft (61) of the electric motor (60) providing the torsional drive power, and wherein the clutch output of the second clutch (65') is drive-connected to the transmission input (51) of the second transmission (50) .

7. The ship's propulsion system (1) according to any one of the Claims 1 to 5, wherein the second clutch (70) is incorporated in the driveshafting (10), so that the clutch output (72) of the second clutch (70) is torsionally drive-connected to the transmission output (52) of the second transmission (50) and so that the clutch input (71) of the second clutch (70) is torsionally drive-connected to the clutch input (31) of the first clutch (30).

8. The ship's propulsion system (1; 1') according to any one of the Claims 1 to 7, wherein the first transmission (40) and the second transmission (50) are connected to one another by way of a flexible oil-tight connection.

9. The ship's propulsion system (1; 1') according to any one of the Claims 1 to 8, wherein furthermore a cover (90) is provided, which provides a noise encapsulation for the electric motor (60) and the second transmission (50) fed with torsional drive power by the same.

## Revendications

1. Système de propulsion de navire (1 ; 1') présentant :
une ligne d'arbre d'entraînement (10 ;10') comportant un arbre propulseur (15, 15'), qui est conçu afin de recevoir la puissance d'entraînement rotatif provenant d'un moteur à combustion interne et d'alimenter la puissance d'entraînement rotatif dans un élément de propulsion (100),
un premier embrayage (30) comportant une entrée d'embrayage (31) et une sortie d'embrayage (32), qui peuvent être amenées sélectivement en et hors liaison d'entraînement l'une avec l'autre, dans lequel l'entrée d'embrayage (31) du premier embrayage (30) est reliée en entraînement avec la ligne d'arbre d'entraînement (10 ;10'), de sorte que la puissance d'entraînement rotatif puisse être transmise à l'élément de propulsion (100),
une première transmission (40) comportant deux interfaces de transmission (41,43) par l'intermédiaire desquelles une puissance d'entraînement rotatif peut respectivement être introduite dans la première transmission (40) et peut être guidée hors de celle-ci, dans lequel une première interface de transmission (41) de la première transmission (40) est reliée en entraînement avec la sortie d'embrayage (32) du premier embrayage (30), et dans lequel dans une deuxième interface de transmission (43) de la première transmission (40) le moteur à combustion interne se met en marche,
une deuxième transmission positionnée élastiquement (50) comportant une entrée de transmission (51) et une sortie de transmission (52), qui est reliée en entraînement avec la ligne d'arbre d'entraînement (10 ;10'), dans lequel la sortie de transmission (52) de la deuxième transmission (50) est reliée en entraînement avec la ligne d'arbre d'entraînement (10 ;10') par l'intermédiaire d'un moyen d'accouplement à cardan (55,55') permettant un déport radial et angulaire et axial et dans lequel la deuxième transmission (50) fournit de son entrée de transmission (51) à sa sortie de transmission (52) une assistance à la vitesse de rotation,
un moteur électrique à grande vitesse (60), qui est conçu afin d'alimenter dans la ligne d'arbre d'entraînement (10 ;10') par l'intermédiaire de l'entrée de transmission (51) de la deuxième transmission (50) une puissance d'entraînement rotatif, et
un deuxième embrayage (70 ;65') comportant une entrée d'embrayage (71) et une sortie d'embrayage (72), qui peuvent être amenées sélectivement en et hors liaison d'entraînement l'une avec l'autre, afin d'établir ou séparer une liaison d'entraînement du moteur électrique (60) avec l'entrée d'embrayage (31) du premier embrayage (30).

2. Système de propulsion de navire (1 ;1') selon la revendication 1, dans lequel des moyen de positionnement sont prévus, de sorte que tant le moteur électrique (60) que la deuxième transmission (50) alimentée par ce dernier en puissance d'entraînement rotatif puisse être appuyé élastiquement sur une fondation de navire.

3. Système de propulsion de navire (1 ;1') selon la revendication 2, dans lequel les moyens de positionnement présentent une construction de châssis (80), sur laquelle le moteur électrique (60) et la deuxième transmission alimentée par ce dernier en puissance d'entraînement rotatif (50) sont maintenus conjointement et une pluralité d'éléments élastiques (81), qui sont montés sur la construction de châssis (80), de sorte que la construction de châssis (80) puisse être appuyé par l'intermédiaire des éléments élastiques (81) sur la fondation du navire.

4. Système de propulsion de navire (1 ;1') selon la revendication 3, dans lequel la construction de châssis (80) est conçue constructivement de manière à atténuer les bruits de structures.

5. Système de propulsion de navire (1 ; 1') selon une des revendications 1 à 4, dans lequel les moyens d'accouplement (55 ;55') sont pourvus d'une atténuation des bruits de structures.

6. Système de propulsion de navire (1 ; 1') selon une des revendications 1 à 5, dans lequel l'entrée d'embrayage du deuxième embrayage (65') est reliée en entraînement avec un arbre de sortie (61) du moteur électrique (60) fournissant la puissance d'entraînement rotatif, et dans lequel la sortie d'embrayage du deuxième embrayage (65') est reliée en entraînement avec l'entrée de transmission (51) de la deuxième transmission (50).

7. Système de propulsion de navire (1 ; 1') selon une des revendications 1 à 5, dans lequel le deuxième embrayage (70) est incorporé dans la ligne d'arbre d'entraînement (10), de sorte que la sortie d'embrayage (72) du deuxième embrayage (70) soit en liaison d'entraînement rotatif avec la sortie de transmission (52) de la deuxième transmission (50) et de sorte que l'entrée d'embrayage (71) du deuxième embrayage (70) soit en liaison d'entraînement rotatif avec l'entrée d'embrayage (31) du premier embrayage (30) .

8. Système de propulsion de navire (1 ; 1') selon une des revendications 1 à 7, dans lequel la première transmission (40) et la deuxième transmission (50) sont reliées l'une à l'autre par l'intermédiaire d'une liaison flexible étanche à l'huile.

9. Système de propulsion de navire (1 ; 1') selon une des revendications 1 à 8, dans lequel en outre un capot (90) est prévu, qui fournit une encapsulation acoustique pour le moteur électrique (60) et la deuxième transmission (50) alimentée en puissance d'entraînement rotatif par ce dernier.
